# EUROPÄISCHE PATENTSCHRIFT

(11) **EP 0 561 209 B1**
(45) Veröffentlichungstag und Bekanntmachung des Hinweises auf die Patenterteilung: **17.01.1996**
(21) Anmeldenummer: 93103276.7
(22) Anmeldetag: 02.03.1993
(51) Int. Cl.: B01F 3/02, F02M 31/06, G05D 23/13

(54) **Vorrichtung zum Mischen von Gasströmen**
Device for mixing gas streams
Dispositif pour mélanger des courants de gaz

(30) Priorität: 18.03.1992 DE 4208616; 04.07.1992 DE 4222041; 06.08.1992 DE 4226018
(43) Veröffentlichungstag der Anmeldung: 22.09.1993
(73) Patentinhaber: KNECHT FILTERWERKE GMBH, D-70376 Stuttgart (DE)
(72) Erfinder: Binz, Peter, W-7015 Korntal-Münchingen (DE); Gebert, Hans, W-7100 Heilbronn-Böckingen (DE); Gutjahr, Hellmuth, W-7000 Suttgart 1 (DE); Jensen, Hans, W-7312 Kirchheim (DE); Mohr, Uwe, Dr., W-7000 Stuttgart 50 (DE); Wagner, Horst, W-7000 Stuttgart 60 (DE)
(74) Vertreter: Dreiss, Hosenthien, Fuhlendorf & Partner

(56) Entgegenhaltungen:
- DE-A- 2 558 644
- DE-U- 7 618 596
- FR-A- 352 436
- FR-A- 982 505
- GB-A- 130 539
- GB-A- 2 112 063
- GB-A- 2 130 301

## Beschreibung

Die Erfindung betrifft eine Vorrichtung zum Mischen von Gasströmen, insbesondere unterschiedlicher Temperatur, z.B. von Verbrennungsluft für eine Brennkraftmaschine, mit wenigstens zwei jeweils einen der Gasströme führenden Kanälen, wobei den Kanälen oder jedem Kanal ein oder mehrere Verschlußelemente zugeordnet sind.

Eine Vorrichtung dieser Art ist z.B. aus der DE 76 18 596 U bekannt, in der ein Luftfilter für Kraftfahrzeuge offenbart ist. Mit der DE 33 42 340 A1, DE 33 19 055 A1, der DE 32 22 814 A1 und der DE 27 55 086 A1 ist eine Vorrichtung zur thermostatischen Regelung der Temperatur der einer Brennkraftmaschine zugeführten Luft bekannt geworden.

Bei diesen Vorrichtungen hat sich als nachteilig herausgestellt, daß die Drosselklappe dann, wenn sie den einen Kanal öffnet bzw. dessen Strömungsquerschnitt vergrößert, den anderen Kanal gleichzeitig schließt, bzw dessen Strömungsquerschnitt verringert. Dabei ergeben sich ungünstige Strömungsverhältnisse, da die Drosselklappe den Strömungswiderstand am Kanalaustritt ungünstig verändert.

Aus der GB-A-130 539 ist eine Mischvorrichtung bekannt, mit der ein Kalt- und ein Warmluftstrom für einen Verbrennungsmotor mischbar sind. Bei dieser Vorrichtung ist aber der Warmluftstrom permanent vorhanden und der Kaltluftstrom ist mittels eines vollständig zu öffnenden Kaltluftstromventil zuschaltbar. Bei zugeschaltetem Kaltluftstrom ist der Warmluftstrom jedoch nicht abschaltbar.

Aus der DE 25 58 644 A1 ist eine Vorrichtung zur wahlweisen Zufuhr von Warmluft oder Kaltluft in den Ausgangsfilter einer Brennkraftmaschine bekannt geworden. Diese Vorrichtung weist eine Steuerklappe auf, mit der der Warmluftkanal in der einen Endstellung bei jedem Betriebszustand der Brennkraftmaschine verschlossen ist. Der Stellbereich liegt also zwischen einem offenen Warmluftkanal mit geschlossenem Kaltluftkanal und einem offenen Warmluftkanal mit teilweise geöffnetem Kaltluftkanal. Eine optimale Mischung der Gasströme kann mit dieser Vorrichtung nicht erzielt werden.

Der Erfindung liegt die Aufgabe zugrunde, eine Vorrichtung der eingangs genannten Art so auszubilden, daß mit ihr auf einfache Weise Gasströme in jedem Mischungsverhältnis gemischt werden können.

Ausgehend von einer Vorrichtung gemäß der DE-A-2558644 wird diese Aufgabe erfindungsgemäß dadurch gelöst, daß das oder die Verschlußelemente zwischen einer Offen- und einer Schließstellung für die Kanäle verstellbar sind und bei mehreren Verschlußelementen die Verschlußelemente miteinander bewegungsgekoppelt sind, wobei innerhalb des gesamten Stellbereichs des oder der Verschlußelemente das oder wenigstens ein Verschlußelement eine Offenstellung für einen der Kanäle einnimmt, und in den Endlagen des Stellbereichs jeweils einer der Kanäle verschlossen ist, und der Verstellweg des oder jedes Verschlußelements oder dessen Antrieb einen Leerweg aufweist, bei dem eine Stellbewegung keine Änderung des Strömungsquerschnitts des betreffenden Kanals bewirkt.

Durch diese Maßnahme ist stets gewährleistet, daß der Strömungsquerschnitt wenigstens eines Kanals vollständig offen ist, so daß die Luft wenigstens aus diesem Kanal ungehindert, d.h. mit dem konstruktionsbedingten minimalen Störmungswiderstand die Vorrichtung passieren kann. Wird aus dem anderen Kanal Luft zugemischt, so bleibt der Strömungsquerschnitt des einen Kanals unverändert, wobei die Regelung durch Veränderung des Strömungsquerschnitts des anderen Kanals erfolgt. Auf diese Weise ist gewährleistet, daß trotz Zumischung von Luft aus dem anderen Kanal der Strömungswiderstand nicht zunimmt, sondern eher verringert wird. Die Zufuhr von Luft aus dem ersten Kanal wird erst dann gedrosselt, wenn der andere Kanal vollständig geöffnet ist. Auf diese Weise ist gewährleistet, daß stets ein Kanal mit seinem vollen Strömungsquerschnitt für die Luftzufuhr zur Verfügung steht und daß entweder der eine oder der andere Kanal verschließbar ist.

Bei einer Weiterbildung ist vorgesehen, daß bei vollständig geöffnetem einen Kanal der andere Kanal durch Verstellung dessen Verschlußelements zuschaltbar ist. Einerseits erfolgt die Zuschaltung des anderen Kanals bzw. die Zumischung von Luft aus dem anderen Kanal erst dann, wenn der eine Kanal vollständig geöffnet ist, d.h., wenn die in diesem Kanal strömende Luft den minimalen Strömungswiderstand erfährt. Andererseits wird die Luft in diesem Kanal erst dann gedrosselt, d.h. der Strömungsquerschnitt dieses Kanals erst dann verändert, wenn der andere Kanal vollständig geöffnet, d.h. die Luft in dem anderen Kanal den minimalen Strömungswiderstand erfährt.

Jedes Verschlußelement oder dessen Antrieb weist einen Leerweg auf, bei dem eine Stellbewegung keine Änderung des Strömungsquerschnitts des betreffenden Kanals bewirkt. Auf diese Weise kann mit einem einzigen Verstellelement der Strömungsquerschnitt des einen Kanals verstellt werden, wohingegen der andere Kanal unverändert bleibt, da bei diesem das Verstellelement lediglich im Leerweg oder außerhalb des Kanalöffnungsbereiches wirkt. Auf diese Weise wird verhindert, daß sich bei der Verstellung des einen Strömungsquerschnitts der andere Strömungsquerschnitt gleichzeitig ändert.

Vorteilhaft entspricht die Länge des Leerwegs wenigstens der Länge des Verstellweges, insbesondere des anderen Verschlußelements. Durch optimale Abstimmung des Leerwegs zum Verstellweg des einen oder anderen Verschlußelements können Situationen bzw. Stellungen ausgeschlossen werden, bei denen Stellbewegungen keine Veränderungen, weder am einen noch am anderen Verschlußelement, bewirken. Derartige Situationen oder Stellungen sind zu vermeiden, da sich die Luftmischung in diesem Fall nicht ändert, obwohl der Antrieb durch seine Stellbewegung eine Veränderung des Mischungsverhältnisses fordert.

Gemäß einer bevorzugten Ausführungsform ist vorgesehen, daß der Leerweg des einen Verschlußelements parallel zum Stellweg des anderen Verschlußelements angeordnet ist. Wird bei dieser Ausgestaltung das eine Verschlußelement über dessen Stellweg verändert, dann findet keine Beeinflussung des anderen Verschlußelements statt, da hier die Verstellbewegung im Leerweg läuft.

Bei einer Weiterbildung ist vorgesehen, daß die beiden Kanäle dasselbe Verschlußelement aufweisen. Bei diesem Ausführungsbeispiel kann ein Verschlußelement eingespart werden, da ein einziges Verschlußelement genügt, um die beiden Kanäle wechselseitig zu verschließen. Dies ist deshalb möglich, da zu keiner Zeit beide Kanäle verschlossen oder wenigstens teilweise verschlossen sind.

Bei einer Weiterbildung der Erfindung kann das Verschlußelement geteilt sein, wobei die Teilungsebene orthogonal, parallel oder schräg zur Drehachse und mit Abstand zum Mittelpunkt des Verschlußelements liegen kann.

Bei vorteilhaften Ausführungsformen ist das Verschlußelement als Schieber, Drehschieber, Klappe, Kugel, Ellipsoid, Hyperboloid oder als ein Segement davon, oder allgemein als rotationssymmetrischer Körper ausgebildet. Bei kegelartigen Körpern sind Dichtungsprobleme durch axiale Justierung lösbar. Weitere Ausführungsformen sind denkbar, sofern mit ihnen Gase führende Kanäle teilweise und vollständig abgeschlossen werden können. Bei zylinderförmigen Verschlußelementen kann die Stellbewegung auch axial verlaufen.

Mit Vorzug sind bei als Drehschieber ausgebildetem Verschlußelement die Kanäle um den Drehschieber herum angeordnet und weisen insbesondere einen dem Leerweg entsprechenden Abstand zueinander auf. Bei dieser Ausführungsform braucht lediglich ein einziger Drehschieber verwendet zu werden, der zwischen den beiden Kanälen hin- und herbewegbar ist. In seiner Zwischenstellung gibt der Drehschieber beide Kanäle frei, so daß der minimale Strömungswiderstand herrscht. Wird der Drehschieber aus dieser Lage herausgedreht, dann überdeckt er lediglich einen der beiden Kanäle, wobei der andere Kanal stets offen ist.

Gemäß unterschiedlicher Ausführungsformen können die Kanäle in einer oder in mehreren Ebenen liegen. Auf diese Weise kann die Vorrichtung an vorgegebene Raumabmessungen bzw. an optimale Strömungsverhältnisse angepaßt werden.

Gemäß einer anderen Ausführungsform ist die Verstelleinrichtung für das Verschlußelement mit einer Vorspannkraft belastbar. Über diese Vorspannkraft, z.B. eine Feder oder dgl. wird die Verstelleinrichtung in eine bestimmte Position gedrängt, in der sie den ihr zugeordneten Kanal entweder verschließt oder vollständig öffnet. Ist das Verschlußelement z.B. über ein Langloch von der Verstelleinrichtung abgekoppelt, nimmt es aufgrund der Vorspannkraft eine Endstellung ein, ohne daß hierfür ein besonderer Antrieb erforderlich ist. Der Antrieb kann dann bei abgekoppeltem einen Verschlußelement das andere Verschlußelement verstellen.

Vorzugsweise kann über die Vorspannkraft ein Leerweg für die Verstelleinrichtung und für die Klappe geschaffen werden. Dies kann z.B. dadurch erfolgen, daß eine Feder zusammengepreßt wird und dabei die Lage der Verstelleinrichtung bzw. des Verschlußelements beibehalten wird.

Bevorzugt ist die Verstelleinrichtung als Differentialstellglied ausgebildet. Über dieses Differentialstellglied können z.B. lineare Stellbewegungen in nichtlineare Bewegungen des Verschlußelements umgewandelt werden.

Um eine möglichst lineare Regelungscharakteristik beim Auf- und Zusteuern der Kanalöffnungen zu erhalten, ist es vorteilhaft, die Öffnungen der Kanäle jeweils in der Form eines langgestreckten Rechtecks mit Längserstreckung in Umfangsrichtung des Drehschiebers auszubilden.

Um möglichst günstige Ausströmverhältnisse aus den Kanalöffnungen zu erhalten, empfiehlt sich eine Anordnung der Kanalöffnungen im Sinne des Anspruchs 11. Bei umfangsmäßiger Überlappung der Kanalöffnungen sind die die Öffungen abdeckenden Flächen des Schiebers der Überlappung entsprechend abzusetzen, damit bei vollständigem Verschluß des einen Kanals der andere vollständig geöffnet sein kann oder umgekehrt.

Eine weitere Verbesserung der Ausströmverhältnisse an den Kanalöffnungen läßt sich durch eine unterschiedliche Höhenlage der Kanalöffnungen in Richtung der Drehschieberachse erreichen und insbesondere sollen die Kanalöffnungen in Richtung der Schieberachse nicht überlappen.

Eine besonders umfangreiche und günstige Erweiterung der Regelungsmöglichkeiten ergibt sich durch eine Aufteilung des Verschlußelements in Richtung der Drehachse in zwei unabhängig voneinander betätigbare Verschlußelemente. Mit dieser Ausführung ist es möglich, jede Kanalöffnung bezüglich seiner Durchflußgröße unabhängig von der anderen Kanalöffnung zu verstellen.

In der Regel wird gefordert, daß die Drehschieber die jeweils zugeordnete Kanalöffnung in Schließstellung dicht abdecken sollen und dies bedeutet, daß die Verschlußflächen der Drehschieber die jeweiligen Kanalränder möglichst abstandsfrei überstreichen müssen. Ist der Abstand zu groß, ist kein dichter Abschluß in Schließstellung möglich. Ist der Abstand sehr eng oder zu gering, kommt es während des Überstreichens der Kanalöffnung zu unerwünschter Reibung.

Mit der Ausgestaltung der Vorrichtung gemäß der Ansprüche 11 und 12 wird eine Verbesserung in dem Sinne geschaffen, daß bei möglichst geringer bzw. fehlender Reibung beim Überstreichen des Verschlußelements über die Kanalöffnungsränder dennoch ein dichter Verschluß in der Schließstellung gegeben ist.

Weitere Vorteile, Merkmale und Einzelheiten der Erfindung ergeben sich aus der nachfolgenden Beschreibung, in der unter Bezugnahme auf die Zeichnung besonders bevorzugte Ausführungsbeispiele im einzelnen wiedergegeben sind. Dabei können die Merkmale jeweils einzeln für sich oder in beliebiger Kombination an der Vorrichtung verwirklicht sein. Es zeigen:
- Figur 1: einen prinzipiellen Aufbau eines ersten Ausführungsbeispiels der erfindungsgemäßen Mischvorrichtung sowie den Bewegungsablauf bei einem Stellvorgang;
- Figur 2: ein prinzipieller Aufbau eines weiteren Ausführungsbeispiels;
- Figur 3: ein prinzipieller Aufbau eines weiteren Ausführungsbeispiels der Erfindung;
- Figur 4: eine Draufsicht auf eine andere Ausführungsform einer Mischvorrichtung, bei der das Verschlußelement als Drehschieber ausgebildet ist;
- Figur 5: einen Schnitt V-V durch die Mischvorrichtung gemäß Figur 4;
- Figur 6: eine Draufsicht auf einen als Verschlußelement dienenden Drehschieber für zwei in einen geschlossenen Raum führende Kanäle;
- Figur 7: eine Draufsicht auf eine Ausführungsform, bei der das Verschlußelement als Kugel ausgebildet ist;
- Figur 8: eine Draufsicht auf eine alternative Ausführungsform zu der Einrichtung nach Fig. 6;
- Figur 9: eine Seitenansicht auf die Einrichtung nach Fig. 8 in Richtung der Pfeile IX-IX;
- Figur 10: einen Schnitt durch die Einrichtung nach Fig. 8 längs der Linie X-X;
- Figur 11: einen Schnitt durch die Einrichtung nach Fig. 8 längs der Linie XI-XI;
- Figur 12: eine Darstellung in der Art nach Fig. 9 mit einem alternativ ausgebildeten Drehschieber, der in seiner Achsrichtung in zwei unabhängig voneinander betätigbare Einzel-Drehschieber aufgeteilt ist;
- Figuren 13 bis 15: eine Einrichtung nach Fig. 8 mit einem geteilten Schieber entsprechende Fig. 12 mit unterschiedlichen Stellungen der in Längsrichtung voneinander getrennten Drehschieber;
- Figur 16: eine Draufsicht auf ein Mischventil mit zwei unabhängigen Drehschiebersegmenten in unterschiedlichen Verschlußstellungen;
- Figur 17: eine Ansicht des Mischventiles nach Fig. 16 in Richtung des Pfeils XVII;
- Figur 18: eine Seitenansicht einer Ausführungsform mit geteiltem Drehschieber.

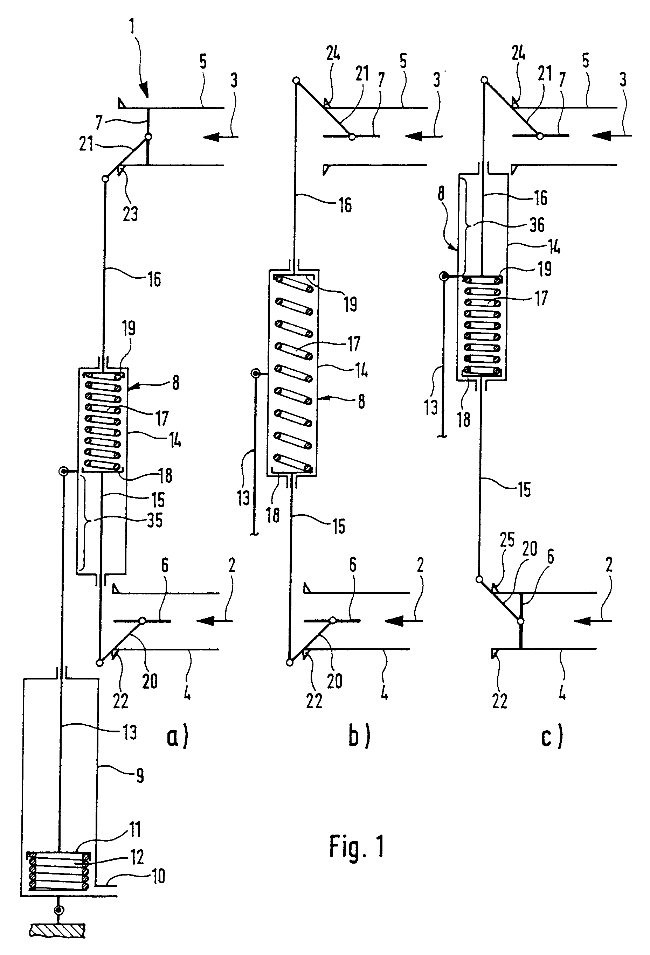

Bei dem in der Figur 1 dargestellten ersten Ausführungsbeispiel einer insgesamt mit 1 bezeichneten Mischvorrichtung für Gasströme 2 und 3, die in Kanälen 4 und 5 geführt werden, sind die Kanäle 4 und 5 über als Drosselklappen 6 und 7 ausgebildete Verschlußelemente in ihrem Strömungsquerschnitt derart veränderbar, daß dieser Querschnitt von maximalem Durchlaß bis vollständigem Abschluß stufenlos veränderbar ist. Dabei werden die beiden Gasströme 2 und 3, die z.B. einen Warmluftstrom und einen Kaltluftstrom repräsentieren, gemischt. Es können aber auch andere Gasströme gemischt werden, z.B. Umgebungsluft und aus einer Abgasrückführanlage zurückgeführtes Abgas, das dem Verbrennungsprozeß wieder zugeführt werden soll. Der Haupteinsatzzweck liegt jedoch bei der Mischung von Gasströmen unterschiedlicher Temperaturen, wodurch ein optimales Verbrennungsgemisch eingestellt und insbesondere Fehlfunktionen des Gemischaufbereitungssystems, z.B. Vergaservereisung oder dgl. verhindert werden soll.

Die Figur 1a zeigt die Mischvorrichtung 1 in einer Position, in der die Drosselklappe 6 für den Kanal 4 für den die Warmluft führenden Gasstrom 2 vollständig geöffnet ist. Der Kanal 5 ist über die Drosselklappe 7 vollständig abgeschlossen. Diese Position der Drosselklappen 6 und 7 wird über ein Differentialglied 8 eingestellt, welches mit einer Unterdruckdose 9 verbunden ist. Die Unterdruckdose 9 ist ihrerseits über einen Anschluß 10 an einen veränderbaren Unterdruck angeschlossen. Dabei hängt die Größe des Unterdrucks von der Temperatur des Mischgases ab, welches z.B. einem Verbrennungsmotor zugeführt wird. Ist z.B. die Temperatur dieses Mischgases niedriger als ein Referenzwert, dann wird ein hoher Unterdruck eingestellt, wohingegen der Unterdruck abnimmt, d.h. sich dem Umgebungsdruck annähert, wenn die Temperatur des Mischgases zunimmt.

In der Unterdruckdose 9 ist in schematischer Weise eine Membran 11 dargestellt, auf deren einen Seite der Unterdruck und auf der anderen Seite der Umgebungsdruck anliegt. Ferner wird die Membran 11 mit der Kraft einer Feder 12 in Richtung des Umgebungsdrucks belastet. Schließlich ist die Membran 11 mit einem Gestänge 13 verbunden, welches am Gehäuse 14 des Differentialgliedes 8 angreift. Über die Größe des Unterdrucks kann also die Lage der Membran 11 innerhalb der Unterdruckdose 9 verändert werden. Dabei wird das Gestänge 13 entsprechend mit dem Gehäuse 14 verlagert und mehr oder weniger weit aus der Unterdruckdose 9 herausgeschoben.

In dem Gehäuse 14 des Differentialgliedes 8 sind zwei Stößel 15 und 16 in Bewegungsrichtung des Gestänges 13 verschieblich gelagert, wobei zwischen den beiden Stößeln 15 und 16 eine Feder 17 vorgesehen ist. Die beiden Stößel 15 und 16 weisen zur Lagerung der Feder 17 jeweils einen Federteller 18 und 19 auf, der außerdem als Anschlag des Stößels 15 bzw. 16 an der jeweiligen Stirninnenseite des Gehäuses 14 dient. Die Stößel 15 und 16 sind ihrerseits mit Verstellarmen 20 und 21 der Drosselklappen 6 und 7 gekoppelt, über die deren Stellung in den Kanälen 4 und 5 veränderbar ist.

Bei der in der Figur 1a wiedergegebenen Position der Mischvorrichtung 1 befindet sich die Unterdruckdose 9 in ihrer maximal zusammengezogenen Stellung, so daß die Membran 11 ihre maximal untere Lage einnimmt. Das Gestänge 13 ist dabei soweit wie möglich in die Unterdruckdose 9 eingezogen. Dies bewirkt, daß das Gehäuse 14, welches am Gestänge 13 festgelegt ist, maximal in Richtung auf den Stößel 15 verlagert ist. Der Stößel 15 drängt dabei den Verstellarm 20 und somit die Drosselklappe 6 in die Offenstellung, wie es in Figur 1a wiedergegeben ist. Dabei liegt der Verstellarm 20 an einem Anschlag 22 an.

Über das Gehäuse 14 des Differentialgliedes 8 ist außerdem der Stößel 16 maximal in Richtung auf den Stößel 15 verlagert, indem der Federteller 19 nach unten, d.h. in Richtung der Zugkraft des Gestänges 13 verlagert ist und an der Innenseite der Stirnwand des Gehäuses 14 anliegt. Der Verstellarm 21 und die Drosselklappe 7 nehmen dabei eine Schließstellung ein, wobei der Verstellarm 21 an einem Anschlag 23 anliegt. In dieser Position des Differentialgliedes 8 ist die Feder 17 zwischen den beiden Federtellern 18 und 19 komprimiert. Da der Kanal 5 über die Drosselklappe 7 vollständig geschlossen ist, strömt lediglich Warmluft z.B. aus dem Bereich des Auspuffkrümmers über den aus dem Kanal 4 an der vollständig geöffneten Drosselklappe 6 vorbei dem Verbrennungsmotor zu.

Erhöht sich aufgrund der allmählich ansteigenden Temperatur des Motors die Temperatur der dem Verbrennungsmotor zugeführten Verbrennungsluft, dann bewegt sich die Membran 11 allmählich unter der Kraft der Feder 12 in Richtung auf das Gestänge 16 und schiebt dieses entsprechend aus der Unterdruckdose 9 heraus. In der Figur 1b ist eine Position des Differentialgliedes 8 dargestellt, in der das Gestänge 13 z.B. zur Hälfte aus der Unterdruckdose 9 ausgeschoben ist. Dabei wird das Gehäuse 14 um den gleichen Stellweg nach oben verschoben. Wie aus der Figur 1b ersichtlich, befindet sich der Stößel 15 nach wie vor in derselben Position, da er über die Feder 17 nach unten gedrängt wird und der Verstellarm 20 am Anschlag 22 anliegt. Das Gehäuse 14 hat also gegenüber dem Federteller 18 einen Leerweg 35 durchschritten. Die Drosselklappe 6 nimmt also nach wie vor die Offenstellung ein. Der Stößel 16 hat sich dagegen nach oben verlagert, da durch die Verschiebung des Gehäuses 14 der Anschlag für den Federteller 19 ebenfalls nach oben verlagert worden ist. Dabei hat sich die Feder 17 gestreckt und den Federteller 19 zusammen mit dem Stößel 16 vom Federteller 18 und vom Stößel 15 entfernt. Durch diese Verlagerung des Stößels 16 wurde der Verstellarm 21 verschwenkt und liegt nunmehr am Anschlag 24 an. Gleichzeitig wurde die Drosselklappe 7 verschwenkt, die nunmehr ihre Offenstellung einnimmt.

Aus der Figur 1b ist ersichtlich, daß der Kanal 4 von der Drosselklappe 6 so lange nicht verschlossen wird, bis die Drosselklappe 7 den Kanal 5 vollständig geöffnet hat. Durch diesen Vorgang verringert sich der Gesamtströmungswiderstand der beiden Kanäle 4 und 5, da zum Kanal 4 allmählich der Kanal 5 hinzugeschaltet wird. Der Warmluft des Kanals 4 wird also allmählich über den Kanal 5 Kaltluft beigemischt.

Steigt der Bedarf an Kaltluft für einen optimalen Verbrennungsprozeß, dann sinkt der Unterdruck in der Unterdruckdose 9 noch weiter ab, wodurch das Gestänge 13 noch weiter aus der Unterdruckdose 9 herausgeschoben wird. Die maximale Ausschubstellung ist in Figur 1c wiedergegeben, wo auch die eine Endlage des Gehäuses 14 des Differentialgliedes 8 dargestellt ist. Durch die Verschiebung des Gehäuses 14 von der in der Figur 1b in die in der Figur 1c wiedergegebenen Position ist über den Federteller 18 der Stößel 15 in Verschieberichtung des Gehäuses 14 mitgenommen worden. Durch diese Verlagerung des Stößels 15 ist der Verstellarm 20 vom Anschlag 22 an einen Anschlag 25 umgelegt worden, und dabei die Drosselklappe 6 in ihre Schließposition verschwenkt worden. Der Kanal 4 ist nun verschlossen.

Da der Verstellarm 21 der Drosselklappe 7 am Anschlag 24 anliegt, verharrt der Stößel 16 in Ruhe, wodurch über den Federteller 19 die Feder 17 wieder komprimiert wird. Das Gehäuse 14 hat gegenüber dem Federteller 19 einen Leerweg 36 durchschritten. Aus Figur 1c wird deutlich, daß der Kanal 4 über die Drosselklappe 6 erst dann geschlossen wird, wenn die Drosselklappe 7 den Kanal 5 vollständig geöffnet hat. Zwar vergrößert sich bei der allmählichen Schließung des Kanals 4 der Gesamtwiderstand, er nimmt jedoch maximal nur den Strömungswiderstand eines einzigen Kanals ein.

Aus den Figuren 1a bis 1b wird deutlich, daß bei der Mischung von Warmluft und Kaltluft bzw. zweier Gasströme 2 und 3 der Gesamtströmungswiderstand der Mischvorrichtung 1 gleich oder kleiner ist als der Strömungswiderstand eines einzigen Kanals 4 bzw. 5.

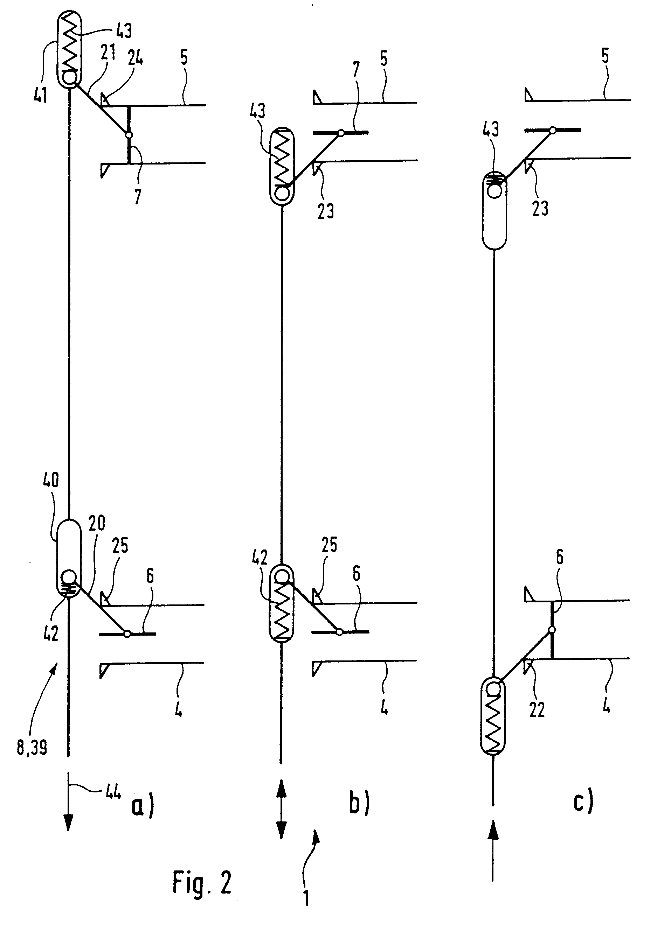

Beim Ausführungsbeispiel der Figur 2, welches im wesentlichen dem der Figur 1 entspricht, wird das Differentialglied 8 von einem Gestänge 39 gebildet. Dieses Gestänge 39 weist zwei Langlöcher 40 und 41 auf, in denen die beiden Verstellarme 20 und 21 gelagert sind. Der Verstellarm 20 komprimiert am unteren Ende des Langlochs 40 eine Feder 42, wohingegen der Verstellarm 21 über eine Feder 43 an das untere Ende des Langlochs 1 gedrängt wird. In der in der Figur 2a dargestellten Position ist der Kanal 4 vollständig geöffnet, wohingegen der Kanal 5 vollständig verschlossen ist. Wird das Gestänge 39 in Richtung des Pfeils 44 bewegt, dann entspannt sich die Feder 42 im Langloch 40, und der Verstellarm 21 wird über die Feder 43 aus seiner Schließlage in die Offenlage mitgenommen. In dieser Offenlage liegt dann der Verstellarm 21 am Anschlag 24 an. Dabei wird die Drosselklappe 7 von der in der Figur 2a dargestellten Schließposition in die in der Figur 2b dargestellten Offenlage verschwenkt. In dieser Stellung des Gestänges 39 sind also die beiden Drosselklappen 6 und 7 vollständig geöffnet und geben dadurch die Querschnitte der Kanäle 4 und 5 vollständig frei.

Wird das Gestänge 39 weiter in Richtung des Pfeils 44 bewegt, dann wird über das Langloch 40, an dessen oberem Ende der Verstellarm 20 anliegt, dieser Verstellarm 20 mitgenommen, bis dieser am Anschlag 22 anliegt. Die Drosselklappe 6 wird dann von ihrer Offenstellung in die Schließposition verdreht und verschließt dabei den Kanal 4. Gleichzeitig wird die Feder 43 im Langloch 41 komprimiert, wohingegen die Lage des Verstellarms 21 unverändert bleibt, da dieser am Anschlag 23 anliegt. In dieser in der Figur 2c gezeigten Stellung der Mischvorrichtung 1 ist also der Kanal 4 verschlossen und der Kanal 5 vollständig geöffnet. Auch bei diesem Ausführungsbeispiel ist in jeder Lage des Differentialgliedes 8 bzw. des Gestänges 39 gewährleistet, daß wenigstens ein Kanal 4 oder 5 vollständig offen ist.

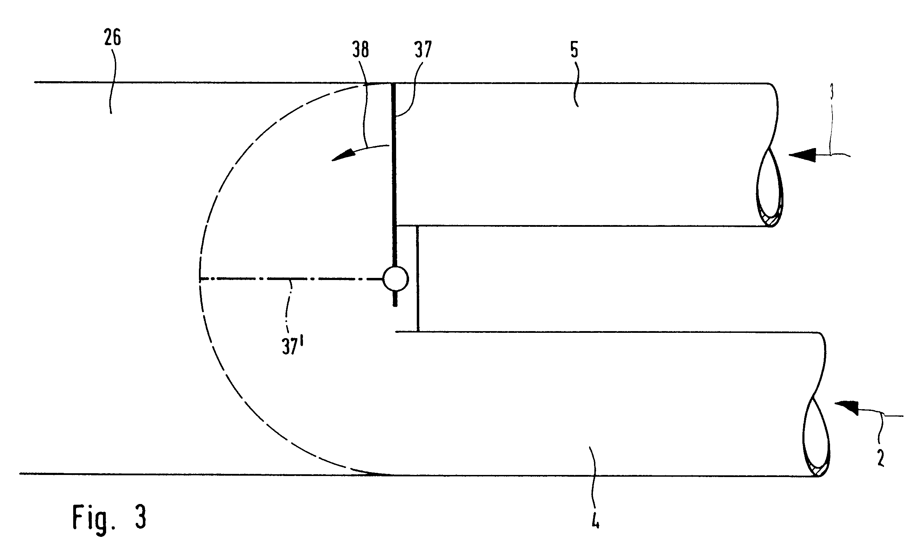

Bei dem in der Figur 3 wiedergegebenen Ausführungsbeispiel liegen die beiden Kanäle 4 und 5 im wesentlichen parallel zueinander und sind wechselseitig über eine schwenkbare Klappe 37 verschließbar. In der in der Figur 3 wiedergegebenen Stellung ist der Kanal 5 über die Klappe 37 verschlossen, wohingegen der Kanal 4 vollständig geöffnet ist. Soll bei Bedarf ein Teil des Gasstroms 3 dem Gasstrom 2 zugemischt werden, dann wird die Klappe 37 in Richtung des Pfeils 38 verschwenkt, so daß ein Teil des Strömungsquerschnitts des Kanals 5 offen ist. Der Strömungsquerschnitt des Kanals 4 bleibt dabei unverändert. Befindet sich die Klappe 37 in der mit strichpunktierer Linie dargestellten Position 37', dann sind beide Kanäle 4 und 5 vollständig geöffnet und es strömen beide Gasströme 2 und 3 einem Raum 26 zu. Erst durch weiteres Verschwenken der Klappe 37 in Richtung des Pfeils 38 wird allmählich der Kanal 4 verschlossen, wohingegen der Kanal 5 vollständig geöffnet bleibt. Auch bei diesem Ausführungsbeispiel ist stets, d.h. in jeder Stellung der Klappe 37 wenigstens ein Kanal 4 oder 5 vollständig geöffnet.

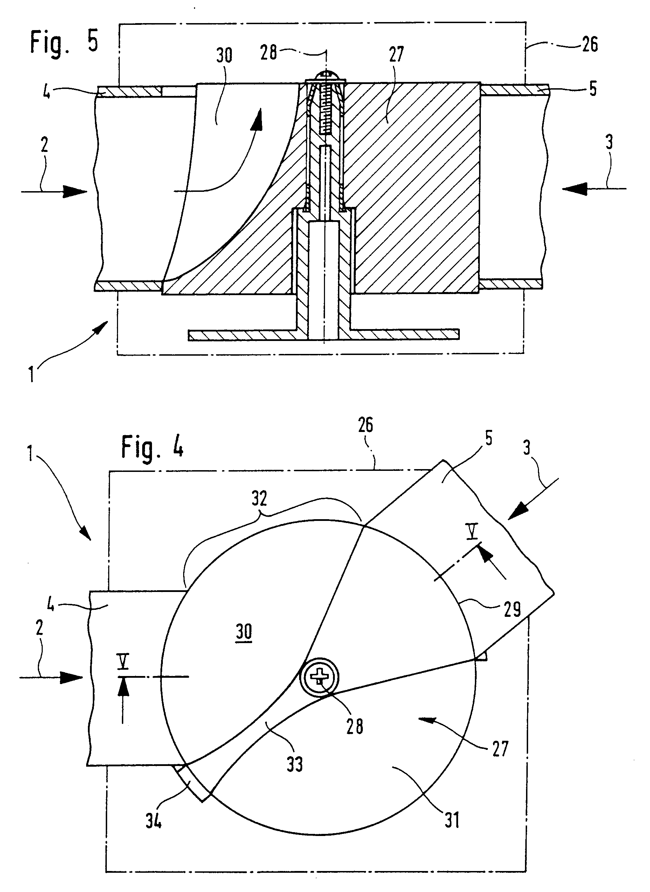

In den Figuren 4 und 5, in denen ein weiteres Ausführungsbeispiel dargestellt ist, deuten die strichpunktierten Linien den geschlossenen Raum 26 an, der bspw. von einem Gehäuse eines Ansaugfilters eines Verbrennungsmotors gebildet sein kann. In diesen geschlossenen Raum 26 münden der die Warmluft führende Kanal 4 und der die Kaltluft führende Kanal 5. Zwischen diesen beiden Kanälen 4 und 5 ist ein Drehschieber 27 um eine Achse 28 drehbar gelagert.

Der Drehschieber 27 besitzt bei dem in den Figuren 4 und 5 gezeigten Ausführungsbeispiel eine Dichtfläche 29, mit der je nach Drehstellung des Drehschiebers 27 die Auslaßöffnung des Kanals 4 bzw. des Kanals 5 verschließbar ist. In den Figuren 4 und 5 ist bspw. die Auslaßöffnung des Kanals 5 verschlossen. Umfangsmäßig angrenzend an die Dichtfläche 29 ist der Drehschieber 27 mit Ausnehmungen 30 und 31 versehen, die bei entsprechender Zuordnung an die Auslaßöffnungen der Kanäle 4 und 5 diese entsprechend fortsetzen und den Gasstrom, wie in Figur 5 wiedergegeben, in axialer Richtung umlenken.

Bei der in der Figur 4 wiedergegebenen Stellung des Drehschiebers 27 ist der Warmluftkanal 4 über die Ausnehmung 30 mit dem geschlossenen Raum 26 verbunden, während der Kaltluftkanal 5 durch die Dichtfläche 29 des Drehschiebers 27 gegenüber dem geschlossenen Raum 26 vollständig abgedichtet ist. Durch eine Drehung des Drehschiebers 27 entgegen der Richtung des Uhrzeigersinns ist eine Öffnung des Kanals 5 möglich, wobei die Dichtfläche 29 in einen außerhalb der Kanalöffnungsbereiche liegenden Abschnitt zwischen den beiden Kanälen 4 und 5 verschoben wird, der nachfolgend als Leerweg 32 bezeichnet wird. In diesem Leerweg 32 hat die Dichtfläche 29 keine Funktion und keine dichtende Aufgabe. Bei dieser Drehbewegung, während der sich die Dichtfläche 29 teilweise im Leerweg 32 und teilweise vor dem Kanal 5 bzw. vollständig im Leerweg 32 befindet, mündet die Öffnung des Kanals 4 nach wie vor mit dem gesamten Querschnitt in die Ausnehmung 30, so daß der gesamte Gasstrom 2 aus dem Kanal 4 in den Raum 26 übertritt. Erst wenn die Dichtfläche 29 über den Leerweg 32 hinaus in Richtung auf die Auslaßöffnung des Kanals 4 verschoben wird, ist der Kanal 5 vollständig geöffnet und wird gleichzeitig der Kanal 4 allmählich verschlossen. Durch eine Zwischenwand 33 zwischen den beiden Ausnehmungen 30 und 31 wird eine gezielte Umlenkung der Gasströme 2 und/oder 3 erzielt. Diese Zwischenwand 33 kann auch ganz oder teilweise wegfallen.

Der Drehschieber 27 ist außerdem mit einem Anschlag 34 versehen, der die beiden Extremstellung, in denen die Dichtfläche 29 den Kanal 5, wie dargestellt, bzw. den Kanal 4, verschließt, definiert.

Der Leerweg 32 zwischen den beiden Kanälen 4 und 5 weist eine Größe auf, die der Bogenlänge der Dichtfläche 29 entspricht. Hierdurch wird gewährleistet, daß zwischen den beiden Extremstellungen des Drehschiebers 27 wenigstens ein Kanal 4 oder 5 vollständig offen ist.

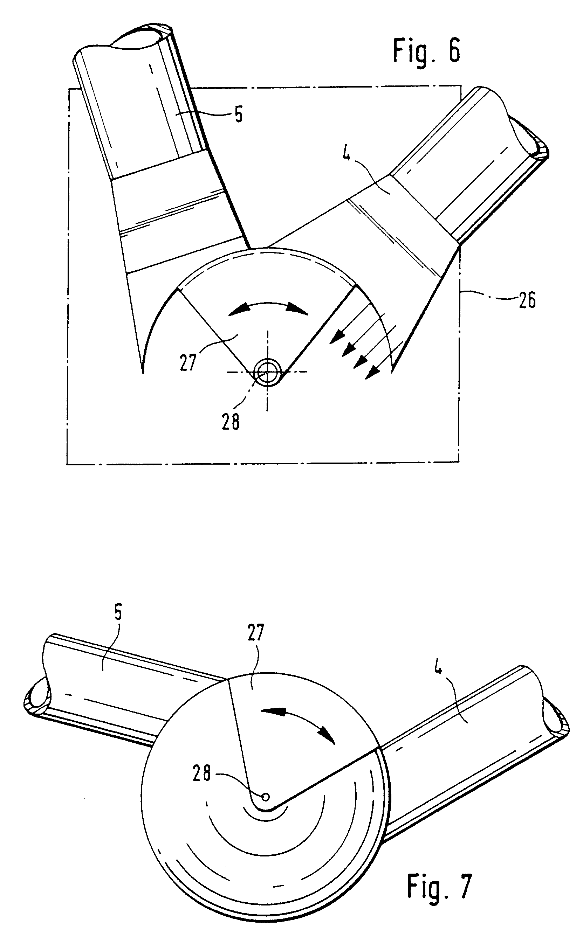

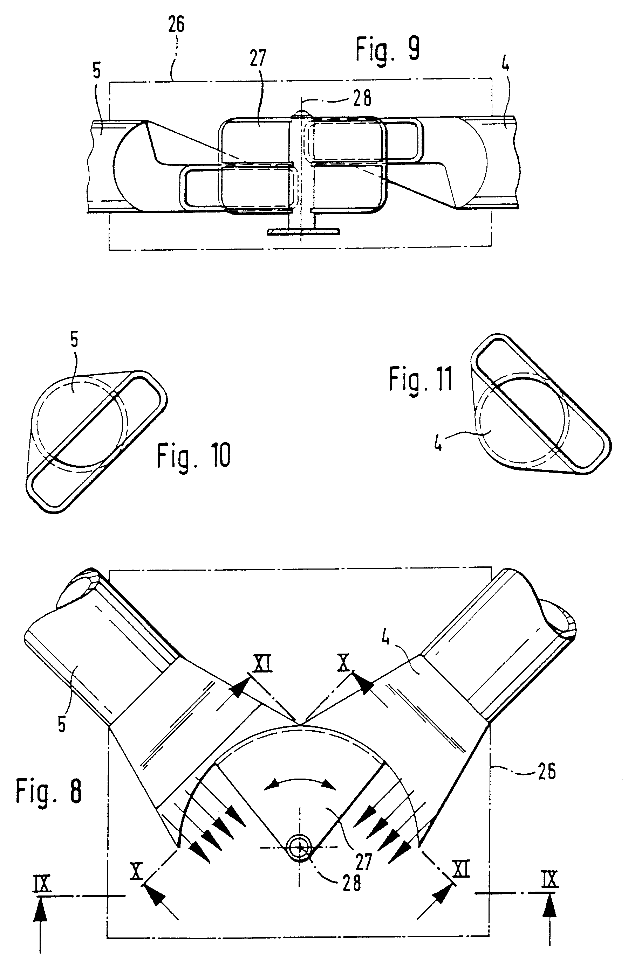

Die Achsen des Warmluft- und des Kaltluftkanals 4 bzw. 5 müssen nicht auf einer gemeinsamen Geraden oder radial zum Verschlußelement liegen, sondern können in einem beliebigen Winkel zueinander stehen. Ein Beispiel hierfür zeigen die Figuren 6 bis 9. Dort liegen die Öffnungen der Kanäle 4 und 5 umfangsmäßig auf einer Seite derart eng beieinander, daß sie in dieser Richtung gerade noch nicht überlappen. Zusätzlich sind die Kanäle 4 und 5 in Achsrichtung des Drehschiebers 27 auch noch übereinanderliegend angeordnet (Fig. 9), wobei sie in dieser Richtung ebenfalls so eng aneinander grenzen, daß sie gerade noch nicht überlappen.

Das Auführungsbeispiel der Figur 7 zeigt einen als Kugel ausgebildeten Drehschieber 27. Ellipsoide, kegelige, kegelstumpfförmige, hyperbolische oder ähnlich geformte rotationssymmetrische Drehschieber sind ebenfalls denkbar.

Der Drehschieber 27 ist im Fall der Figuren 8 und 9 als dreieckförmiges Segment mit zylindrischer Dichtfläche für die Kanäle 4 und 5 ausgebildet. Bei dieser Ausführungsform ergeben sich günstige Strömungsverhältnisse der in dem geschlossenen Raum 26 aufeinander treffenden Warm- und Kaltluftansaugströme. Die zylindrische Dichtfläche wird bei dieser Ausführung von einem zylindrischen Mantelabschnitt gebildet.

Die Öffnungsquerschnitte der Kanäle 4 und 5 sind jeweils als langgestreckte Rechtecke ausgebildet, wobei sich die Längserstreckung der Rechtecke in Drehschieberumfangsrichtung erstreckt. Auf diese Weise läßt sich durch Schließen und Öffnen der Öffnungen eine lineare Regelcharakteristik für die Mischung zwischen kalter und warmer Ansaugluft realisieren.

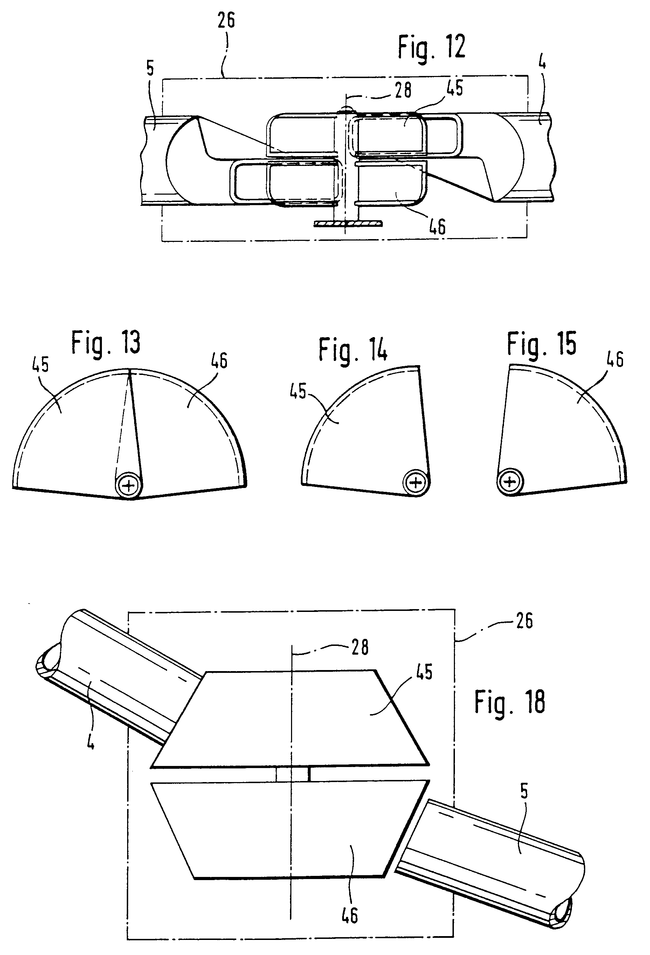

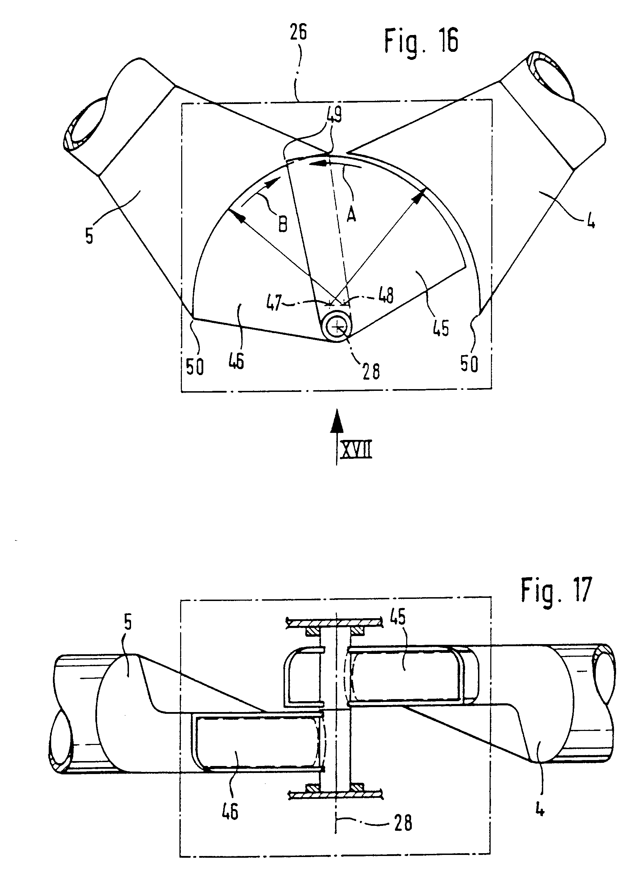

Eine weitere Verbesserung der Regelmöglichkeiten ergibt sich durch die in Figur 12 geteilte Ausführung des Drehschiebers 27 in zwei in Drehschieberachsrichtung unabhängig voneinander betätigbare Einzel-Drehschieber 45 und 46. Bei dieser Ausführung mögliche Stellungen der Einzel-Drehschieber 45 und 46 zeigen die Figuren 13-15. Bei der Darstellung in Figur 13 sind beide Kanäle 4 und 5 vollständig geöffnet. Figur 14 zeigt eine Drehschieberstellung, bei der beide Drehschieber 45 und 46 in Umfangsrichtung deckungsgleich übereinanderliegen, wodurch mit dem in dieser Darstellung nicht sichtbaren Drehschieber 46 der Kaltluftkanal 5 vollständig verschlossen ist und der Drehschieber 45 den Warmluftkanal 4 vollständig öffnet. Bei der Stellung der Drehschieber 45 und 46 nach Figur 15 ist dagegen die Öffnung des Warmluftkanals 4 vollständig verschlossen, während die Öffnung des Kaltluftkanals 5 vollständig geöffnet ist. Selbstverständlich sind sämtliche Zwischenstellungen zwischen den in den Figuren 13-15 dargestellten Stellungen der Drehschieber 45 und 46 möglich. Bei der Ausführungsform der Figuren 16 und 17 ist jedes Drehschiebersegment 45,46 für sich unabhängig von dem anderen schwenkbar. Die Verschlußflächen der beiden Drehschiebersegmente 45,46 liegen jeweils auf einer Zylinderfläche mit einer gegenüber der Schwenkachse 28 parallel versetzten Achse 47 bzw. 48. Die Zylinderflächenachsen 47 bzw. 48 sind jeweils derart von der Schwenkachse 28 versetzt, daß in Schließstellung eine dichte Abdeckung der jeweils zugeordneten Kanalöffnungen gegeben ist, während die Drehschiebersegment-Verschlußfläche in geöffneter Schieberstellung Abstand gegenüber den Kanalöffnungsrändern aufweist.

Mit den Pfeilen A und B sind die jeweiligen Öffnungsrichtungen für die Drehschiebersegmente 45 und 46 angegeben. Der Versatz der Achsen 47 bzw. 48 gegenüber der Schwenkachse 28 ist nun derart, daß die jeweils in Öffnungsdrehrichtung vorne liegende Drehschiebersegmentkante 49 einen größeren Abstand von der Schwenkachse 28 besitzt als die in Dreh-Öffnungsrichtung jeweils hinten liegende Drehschiebersegmentkante 50. Die Mantelfläche, auf der die Ränder der jeweiligen Öffnung der Kanäle 4 bzw. 5 liegen, ist als Zylindermantelfläche ausgebildet, deren Zylinderachse jeweils mit den Achsen 47 bzw. 48 übereinstimmt und zwar bei jeweiliger Verschlußstellung des betreffenden Drehschiebersegmentes 45 bzw. 46. Auf diese Weise ergibt sich beim Öffnen eines Drehschiebersegments 45 bzw. 46 gegenüber den Rändern der Öffnungen der Kanäle 4 bzw. 5 ein sichelförmiger Abstand.

Durch die oben beschriebene Auslegung der Schließflächen der Drehschiebersegmente 45 und 46 mit entsprechender Anpassung der Lage der Ränder der Kanalöffnungen ist es auf einfache Weise möglich, die Drehschiebersegmente mit Bezug auf die Kanalöffnungsränder berührungsfrei bis in die jeweilige Schließstellung zu verschwenken. In der Schließstellung können die Drehschiebersegmente 45,46 die Öffnungen dann fest verschließen, da sie in dieser Position auf Anschlag gegenüber den Rändern der Kanalöffnungen drehbar sind.

Diese Wirkung wird auch bei der Ausführungsform der Figur 18 erzielt, wo die Drehschiebersegmente 45 und 46 in der Schließlage dicht an den Kanälen 4 bzw. 5 anliegen und durch eine kombinierte Dreh-Verschiebebewegung, also einer Schraubbewegung von diesen abheben und die Kanäle 4 bzw. 5 öffnen, wie es z.B: beim Kanal 5 gezeigt ist. Dabei können die beiden Segmente 45 und 46 unabhängig voneinander oder gemeinsam betätigbar sein.

## Patentansprüche

1. Vorrichtung zuin Mischen von Gasströmen (2 und 3), insbesondere unterschiedlicher Temperatur, z.B. von Verbrennungsluft für eine Brennkaftmaschine, mit wenigstens zwei jeweils einen der Gasströme (2 und 3) führenden Kanälen (4 und 5), wobei den Kanälen oder jedem Kanal (4 bzw. 5) ein oder mehrere Verschlußelemente (6 und 7;27,37) zugeordnet sind, und das oder die Verschlußelemente zwischen einer Offen- und einer Schließstellung für die Kanäle (4 und 5) verstellbar sind und bei mehreren Verschlußelementen die Verschlußelemente miteinander bewegungsgekoppelt sind, wobei innerhalb des gesamten Stellbereichs des oder der Verschlußelemente das oder wenigstens ein Verschlußelement eine Offenstellung für einen der Kanäle (4 und 5) einnimmt, und in den Endlagen des Stellbereichs jeweils einer der Kanäle (4 und 5) verschlossen ist, und der Verstellweg des oder jedes Verschlußelements (6 und 7;27;37) oder dessen Antrieb einen Leerweg (32;35,36) aufweist, bei dem eine Stellbewegung keine Änderung des Strömungsquerschnitts des betreffenden Kanals (5 bzw.4) bewirkt.

2. Vorrichtung nach Anspruch 1, dadurch gekennzeichnet, daß bei vollständig geöffnetem einen Kanal (4 bzs. 5) der andere Kanal (5 bzw. 4) durch Verstellung dessen Verschlußelements (7 bzw.6;27) zu- oder abschaltbar ist.

3. Vorrichtung nach Anspruch 1 oder 2, dadurch gekennzeichnet, daß der minimale Gesamtströmungsquerschnitt dann vorherrscht, wenn einer der Kanäle (4 bzw. 5) verschlossen ist, wobei bei Zuschaltung dieses Kanals (4 bzw. 5) der Gesamtströmungsquerschnitt zunimmt.

4. Vorrichtung nach einem der vorhergehenden Ansprüche, dadurch gekennzeichnet, daß die Länge des Leerwegs (35,36) der Länge eines Versteliwegs, des einen oder eines anderen Verschlußelements entspricht und z.B. der Leerweg (35,36) des einen Verschlußelements parallel zum Stellweg des anderen Verschlußelements angeordnet ist.

5. Vorrichtung nach einem der Ansprüche 1 bis 3, dadurch gekennzeichnet, daß die beiden Kanäle (4 und 5) über dasselbe Verschlußelement (27;37) verschließbar sind oder das Verschlußelement insbesondere in Richtung senkrecht zu seiner Drehachse geteilt ist und die beiden Teile unabhängig voneinander bedienbar sind.

6. Vorrichtung nach einem der vorhergehenden Ansprüche, dadurch gekennzeichnet, daß das Verschlußelement als Drehschieber (27), Klappe (6 und 7;37) oder als rotationssymmetrisches Element ausgebildet ist und eine Drehbewegung oder eine Verschiebebewegung oder eine kombinierte Bewegung ausführt, und z.B. bei als Drehschieber (27) ausgebildetem Verschlußelement die Kanäle (4 und 5) um den Drehschieber (27) herum angeordnet sind.

7. Vorrichtung nach einem der Ansprüche 1 bis 4 oder 6, dadurch gekennzeichnet, daß das Verschlußelement mit einer Vorspannkraft (17;42,43) belastbar ist und z.B. über die Vorspannkraft ein Leerweg (35,36) für die Verstelleinrichtung und für die Klappe (6 bzw. 7) geschaffen werden kann.

8. Vorrichtung nach einem der Ansprüche 1 bis 3, 5 oder 6, dadurch gekennzeichnet, daß die Öffnugnen der Kanäle (4,5) jeweils die Form eines langgestreckten Rechtecks mit Längserstreckung in Umfangsrichtung des Verschlußelements (27;45,46) besitzen.

9. Vorrichtung nach einem der Ansprüche 1 bis 3, 5, 6 oder 8, dadurch gekennzeichnet, daß die Öffnungen der Kanäle (4,5) an ihren umfangsmäßig aneinander zugewandten Enden wesentlich enger oder sogar überlappend aneinander liegen als an ihren jeweils anderen umfangsmäßigen Enden und daß das Verschlußelement (27;45,46) auf seinem Weg zwischen seinen umfangsmäßig extremen Endstellungen über den Bereich der eng bzw. überlappend zusammenliegenden Kanalöffnungskanten hinweg bewegbar ist.

10. Vorrichtung nach einem der Ansprüche 1 bis 3, 5, 6 oder 8, 9, dadurch gekennzeichnet, daß die Öffnungen der Kanäle (4,5) in Richtung der Achse des Verschlußelements (27;45,46) auf unterschiedlichen Höhen liegen, und z.B. die Öffnungen der Kanäle (4,5) in Richtung der Achse (28) des Verschlußelements (27;45,46) nicht überlappen.

11. Vorrichtung nach einem der Ansprüche 1 bis 3, 5, 6 oder 8 bis 10, dadurch gekennzeichnet, daß die Dreh- bzw. Schwenkachse (28) des Verschlußelements einen Abstand zur Achse (47,48) der die Kanalöffnungen aufweisenden Mantelfläche besitzt.

12. Vorrichtung nach einem der Ansprüche 1 bis 3, 5, 6 oder 8 bis 11, dadurch gekennzeichnet, daß das Verschlußelement (27) beim Öffnen wenigstens eines Kanals (4,5) von der Öffnung abhebt.

## Claims

1. Device for mixing gas streams (2 and 3), in particular of different temperature, e.g. of combustion air for an internal combustion engine, with at least two ducts (4 and 5) each directing one of the gas streams (2 and 3), wherein on or several closing elements (6 and 7; 27, 37) are allocated to the ducts or to each duct (4 or 5), and the closing element or elements may be moved between an open and a closed position for the ducts (4 and 5), and if there are several closing elements, the movements of the closing elements are coupled to one another, in which case the closing element or at least one closing element assumes an open position for one of the ducts (4 and 5) within the overall adjustment range of the closing element or elements and is closed in the end positions of the adjustment range of a respective one of the ducts (4 and 5), and the movement path of the closing element or of each closing element (6 and 7; 27, 37) or of its drive has a no-load path (32; 35, 36) in which an adjusting movement does not cause any change to the flow cross-section of the respective duct (5 or 4).

2. Device according to Claim 1, characterised in that when the one duct (4 or 5) is fully open, the other duct (5 or 4) can be connected or disconnected by moving its closing elements (7 or 6; 27).

3. Device according to Claim 1 or 2, characterised in that the minimum overall flow cross-section prevails when one of the ducts (4 or 5) is closed, and the overall cross-section increases when this duct (4 or 5) is connected.

4. Device according to one of the preceding claims, characterised in that the length of the no-load path (35, 36) corresponds to the length of a movement path of one closing element or the other, and, for example, the no-load path (35, 36) of one closing element is arranged parallel to the control path of the other closing element.

5. Device according to one of Claims 1 to 3, characterised in that the two ducts (4 and 5) may be closed via the same closing element (27, 37) or the closing element is divided in particular vertically to its rotational axis and the two parts may be operated independently of one another.

6. Device according to one of the preceding claims, characterised in that the closing element is constructed as a rotary disc valve (27), a flap (6 and 7; 37) or as a rotationally symmetrical element, and makes a rotational movement or a sliding movement or a combined movement, and, for example, when the closing element is in the form of a rotary disc valve (27), the ducts (4 and 5) are arranged around the rotary disc valve (27).

7. Device according to one of Claims 1 to 4 or 6, characterised in that a prestress force may be applied to the closing element, and a no-load path (35, 36) can be created for the displacement means and for the flap (6 or 7), for example, via the prestress force.

8. Device according to one of Claims 1 to 3, 5 or 6, characterised in that the openings of the ducts (4, 5) each have the form of an elongated rectangle with a longitudinal extension in the peripheral direction of the closing element (27; 45, 46).

9. Device according to one of Claims 1 to 3, 5, 6 or 8, characterised in that at their ends facing one another peripherally, the openings of the ducts (4, 5) abut one another substantially more closely, or even so that they overlap, than at their respective other peripheral ends; and that the closing element (27; 45, 46) may be moved on its path between its peripherally extreme end positions beyond the area of the closely abutting or overlapping edges of the duct openings.

10. Device according to one of Claims 1 to 3, 5, 6 or 8, 9, characterised in that in the direction of the axis of the closing element (27; 45, 46), the openings of the ducts (4, 5) lie on different levels, and, for example, the openings of the ducts (4, 5) do not overlap in the direction of the axis (28) of the closing element (27; 45, 46).

11. Device according to one of Claims 1 to 3, 5, 6 or 8 to 10, characterised in that the rotational or pivot axis (28) of the closing element is at a distance from the axis (47, 48) of the shell surface with the duct openings.

12. Device according to one of Claims 1 to 3, 5, 6 or 8 to 11, characterised in that the closing element (27) lifts from the opening when at least one duct (4, 5) is opened.

## Revendications

1. Dispositif de mélange de courants de gaz (2 et 3), en particulier de température différente, par exemple d'air comburant pour un moteur à combustion interne, comportant au moins deux conduits (4 et 5) conduisant chacun un des courants de gaz (2 et 3), à ces conduits ou à chacun d'eux (4 ou 5) étant associés un ou plusieurs éléments obturateurs (6 et 7 ; 27, 37), et l'élément obturateur ou les éléments obturateurs étant mobiles entre une position d'ouverture et une position de fermeture des conduits (4 et 5) et, dans le cas de plusieurs éléments obturateurs, ceux-ci étant accouplés dans leur mouvement, dans tout le domaine de réglage de l'élément obturateur ou des éléments obturateurs, l'élément obturateur ou au moins un élément obturateur occupant une position d'ouverture d'un des conduits (4 et 5), et dans chacune des positions extrêmes du domaine de réglage, un des conduits (4 et 5) étant fermé, et la course de manoeuvre de l'élément obturateur ou de chaque élément obturateur (6 et 7 ; 27, 37) ou la commande de celui-ci présentant une course à vide (32 ; 35, 36) dans laquelle un mouvement de réglage ne produit pas de modification de la section de passage du conduit correspondant (5 ou 4).

2. Dispositif selon la revendication 1, caractérisé en ce que lorsqu'un conduit (4 ou 5) est complètement ouvert, l'autre conduit (5 ou 4) peut être mis en circuit ou hors circuit par manoeuvre de son élément obturateur (7 ou 6 ; 17).

3. Dispositif selon l'une des revendications 1 et 2, caractérisé en ce que la section totale minimale de passage prédomine lorsqu'un des conduits (4 ou 5) est fermé, la section totale de passage augmentant à la mise en circuit de ce conduit (4 ou 5).

4. Dispositif selon l'une des revendications précédentes, caractérisé en ce que la longueur de la course à vide (35, 36) correspond à la longueur d une course de manoeuvre d un ou d'un autre élément obturateur et par exemple, la course à vide (35, 36) d'un élément obturateur est parallèle à la course de réglage de l'autre élément obturateur.

5. Dispositif selon l'une des revendications 1 à 3, caractérisé en ce que les deux conduits (4 et 5) peuvent être fermés par le même élément obturateur (27 ; 37), ou l'élément obturateur est divisé en particulier dans la direction perpendiculaire à son axe de rotation et les deux parties peuvent être manoeuvrées indépendamment l'une de l'autre.

6. Dispositif selon l'une des revendications précédentes, caractérisé en ce que l'élément obturateur est un tournant (27), un papillon (6 et 7 ; 37) ou un élément à symétrie de révolution et exécute un mouvement de rotation ou un mouvement de translation ou un mouvement combiné, et si par exemple l'élément obturateur est un tournant (27), les conduits (4 et 5) sont placés autour de lui.

7. Dispositif selon l'une des revendications 1 à 4 ou 6, caractérisé en ce que l'élément obturateur peut être chargé par une force de précontrainte (17 ; 42, 43) et par exemple par cette force de précontrainte peut être créée une course à vide (35, 36) pour le dispositif de manoeuvre et pour le papillon (6 ou 7).

8. Dispositif selon l'une des revendications 1 à 3, 5 ou 6, caractérisé en ce que les orifices des conduits (4, 5) ont la forme d'un rectangle allongé dont la longueur s'étend dans la direction circonférentielle de l'élément obturateur (27 ; 45, 46).

9. Dispositif selon l'une des revendications 1 à 3, 5, 6 ou 8, caractérisé en ce que les orifices des conduits (4, 5) sont beaucoup plus rapprochés ou même chevauchants à leurs extrémités en regard circonférentiellement qu'à leurs autres extrémités circonférentielles, et que l'élément obturateur, dans sa course entre ses positions extrêmes circonférentiellement, peut franchir la zone des bords d'orifices de conduits réunis étroitement ou avec chevauchement.

10. Dispositif selon l'une des revendications 1 à 3, 5, 6 ou 8, 9, caractérisé en ce que les orifices des conduits (4, 5) sont à des hauteurs différentes dans la direction de l'axe de l'élément obturateur (27 ; 45, 46), et par exemple les orifices des conduits (4, 5) ne chevauchent pas dans la direction de l'axe (28) de l'élément obturateur (27 ; 45, 46).

11. Dispositif selon l'une des revendications 1 à 3, 5, 6 ou 8 à 10, caractérisé en ce que l'axe de rotation (28) de l'élément obturateur est à une certaine distance de l'axe (47, 48) de la surface latérale présentant les orifices des conduits.

12. Dispositif selon l'une des revendications 1 à 3, 5, 6 ou 8 à 11, caractérisé en ce que l'élément obturateur (27), lors de l'ouverture d'au moins un conduit (4, 5), s'écarte de l'orifice.
